# EUROPÄISCHE PATENTANMELDUNG

(11) **EP 4 202 219 A1**
(43) Veröffentlichungstag der Anmeldung: **28.06.2023**
(21) Anmeldenummer: 22215478.3
(22) Anmeldetag: 21.12.2022
(51) Int. Cl.: F03D 80/00, F03D 15/00

(54) **BREMSVORRICHTUNG FÜR EINE WINDENERGIEANLAGE UND VERFAHREN ZUR ERHÖHUNG DER VERSCHLEISS-FESTIGKEIT UND MINIMIERUNG DES BREMSSTAUBANFALLS BEI EINER DERARTIGEN BREMSVORRICHTUNG**

(30) Priorität: 22.12.2021 DE 102021134411
(71) Anmelder: Global Tech I Offshore Wind GmbH, 20459 Hamburg (DE)
(72) Erfinder: Schnetgöke, Hanno, 22041 Hamburg (DE)
(74) Vertreter: Heinemeyer, Karsten

(57) **Zusammenfassung**

Beschrieben wird eine Bremsvorrichtung (1) für eine Windenergieanlage sowie ein Verfahren zur Erhöhung der Verschleißfestigkeit und Minimierung der Bremsstaubbildung bei einer derartigen Bremsvorrichtung.

Die Bremsvorrichtung verfügt über eine Bremsscheibe (2), die mechanisch an eine vom Wind wenigstens mittelbar antreibbare Welle (3) gekoppelt oder Teil einer Azimutbremsvorrichtung ist und über wenigstens ein Bremselement (4), das mittels einer Bremsaktorik (5) relativ zur Bremsscheibe (2) in wenigstens eine Bremsstellung, in der das Bremselement (4) die Bremsscheibe (2) wenigstens bereichsweise berührt, und in zumindest eine Laufstellung, in der das Bremselement (4) von der Bremsscheibe (2) abgehoben ist, bewegbar ist.

Die beschriebene technische Lösung zeichnet sich dadurch aus, dass das Bremselement (2) in einem Reibbereich (6), der die Bremsscheibe (2) in der Bremsstellung wenigstens teilweise berührt, eine durch einen thermischen Beschichtungsvorgang erzeugte, einen Verschleiß des Reibbereichs (6) zumindest verringernde Beschichtung (7) aufweist.

## Beschreibung

Die Erfindung betrifft eine Rotorbremsvorrichtung für eine Windenergieanlage sowie ein Verfahren zur Erhöhung der Verschleißfestigkeit und Minimierung des Bremsstaubanfalls bei einer derartigen Rotorbremsvorrichtung. Die Rotorbremsvorrichtung verfügt über eine Bremsscheibe, die mechanisch an eine zumindest mittelbar vom Wind antreibbare Welle gekoppelt ist und über wenigstens ein Bremselement, das mittels einer mechanisch, hydraulisch oder pneumatisch betreibbaren Bremsaktorik relativ zur Bremsscheibe in wenigstens eine Bremsstellung, in der das Bremselement die Bremsscheibe wenigstens bereichsweise berührt, und in zumindest eine Laufstellung, in der das Bremselement von der Bremsscheibe abgehoben ist, bewegbar ist.

Der Anteil der sogenannten erneuerbaren Energien, zu denen auch die Windenergie gehört, an der gesamten Stromproduktion, ist in den vergangenen Jahren weltweit bei gleichzeitig wachsendem Energiebedarf stetig gestiegen. Dennoch besteht, insbesondere aufgrund des von Menschen verursachten Klimawandels, der dringende Bedarf, den Anteil der erneuerbaren Energien am sogenannten Energiemix weiter zu erhöhen. In Bezug auf die Windenergie bedeutet dies, dass auch zukünftig eine große Anzahl von Windenergieanlagen sowohl an Land als auch auf See, als sogenannte On- oder Offshore-Windenergieanlagen, errichtet werden. Oftmals werden die Windenergieanlagen nicht nur auf See, sondern auch an Land in schlecht zugänglichen Gebieten, teilweise sogar in sandigen Wüstengebieten errichtet.

Um mit einer einzigen Windenergieanlage eine möglichst große Menge von Strom pro Zeiteinheit erzeugen zu können, besteht stets ein Bemühen darin, Anlagen mit möglichst großer Turmhöhe und Windraddurchmesser zu errichten. Aus technischer Sicht bedeutet dies, dass die Anforderungen an die Festigkeit und Langzeitstabilität, insbesondere der mechanischen Komponenten, wie etwa Rotorblätter, Antriebswellen, Getriebe und Bremseinrichtungen, immer höher werden. Eine wesentliche Komponente einer Windenergieanlage stellt in diesem Zusammenhang die Rotorbremse dar, mit der der Windrotor bei niedriger Drehzahl von beispielsweise 5 U/min abgebremst wird, zum Beispiel, um einen Notstopp herbeizuführen oder bei starkem Wind ein Überdrehen des Rotors zu verhindern. Die Rotorbremse wird in der Regel aktiviert, nachdem der Rotor bereits mit der aerodynamischen Bremse durch Verstellung der Rotorblätter von einer höheren auf die niedrigere Drehzahl abgebremst wurde. Die entsprechenden Rotorbremsen sind entweder direkt an der Rotorwelle, an der Generatorwelle oder aber an beiden Wellen angeordnet.

Mit immer größer werdenden Anlagenleistungen steigt auch die Belastung und Beanspruchung der Rotorbremsvorrichtungen.

Die bekannten Rotorbremsvorrichtungen sind üblicherweise ausfallsicher konstruiert und werden über Federelemente betätigt, die nach Bedarf hydraulisch von der Bremsscheibe abgehoben bzw. gelüftet werden. Die jeweils aufgebrachten Federkräfte, mit denen die einzelnen Bremselemente gegen die mit dem Rotor drehende Bremsscheibe gedrückt werden, sind vergleichsweise groß und werden von den Federn direkt oder über ein separates Druckelement aufgebracht. Um das Lösen der Bremsen zu bewirken, werden die Federn mithilfe von Hydrauliköl aus einem Hochdruckhydraulikaggregat beaufschlagt. Insgesamt ist bei der Auslegung und Konstruktion von Rotorbremsvorrichtungen zu beachten, dass diese heutzutage häufiger als früher betätigt werden und somit über eine höhere Belastbarkeit und größere Zuverlässigkeit verfügen müssen. Vielfach sind Windenergieanlagen extremen Belastungen, verursacht durch hohe Luftfeuchte, salzhaltige Luft, große Temperaturschwankungen und/oder Luftverunreinigungen, zu denen auch Stäube und Sand gehören können, ausgesetzt. Auch die aufgrund von Bremsvorgängen an den Reibflächen entstehenden Bremsbelagsstäube können ein Problem darstellen, da sich diese innerhalb der Gondel absetzen und, insbesondere, wenn diese eingeatmet werden, eine Gefahr für die Gesundheit des Betriebs- und Wartungspersonals darstellen.

Im Weiteren muss bei der Entwicklung von Windenergieanlagen und deren Komponenten berücksichtigt werden, dass der Betrieb derartiger Anlagen ohne Betriebspersonal vor Ort und oftmals in abgelegenen Gebieten erfolgt, sodass die Anzahl von Reparatur- und Wartungsarbeiten auf ein Minimum beschränkt werden sollte und der Aufwand für die Durchführung derartiger Arbeiten möglich geringgehalten werden sollte.

Eine Rotorbremse kann sowohl an der Rotorwelle als auch hinter dem Getriebe an der im Vergleich zur Rotorwelle schnell drehenden Generatorwelle angeordnet sein. In vielen Fällen wird die Rotorbremse an der langsam drehenden Rotorwelle angeordnet, da in diesem Bereich der Gondel einer Windenergieanlage eine verhältnismäßig große Bremsscheibe mit entsprechend großen Reibbelagflächen unterzubringen ist. Bei der Auslegung der Bremsscheibe ist zu berücksichtigen, dass die Bremsbelagfläche ausreichen muss, um die beim Bremsvorgang, insbesondere bei einem Notstopp, entstehende Wärme sicher und ohne Beschädigungen abzuführen. Ferner sind die Betriebsdrehzahl und der zur Verfügung stehender Platz Faktoren, die den Bremsscheibendurchmesser bestimmen und die Auswahl einer Bremse einschränken können.

Für die Auslegung von Bremsvorrichtungen für Windenergieanlagen stellt das erforderliche Bremsmoment die entscheidende Größe für die Auslegung dar und wird bereits im frühen Konstruktionsstadium einer Bremsanlageermittelt. Bei einer Rotorbremsvorrichtung hängt das maximal zulässige Bremsmoment von der Größe und Ausführung der Rotorblätter und ihrer Verankerung auf der Eingangswelle des Getriebes ab. In jedem Fall ist ein Mindestbremsmoment, das nicht unterschritten werden darf, vorzusehen, da ansonsten sich ändernde Betriebsbedingungen, insbesondere aufgrund von Änderungen der Windstärke, zu einer Gefährdung der Windenergieanlage führen können.

Im Hinblick auf die bei den Bremsvorgängen auftretenden Bremsmomente und die erforderliche Wärmeabfuhr ist bei der Auslegung der Komponenten einer Rotorbremsvorrichtung in jedem Fall die Fähigkeit zur Aufnahme von Energiespitzen zu berücksichtigen. Hierbei müssen die Bremsscheiben zuverlässig die auftretenden Momente aufnehmen und thermische Lasten abführen, was allerdings dazu führt, dass die zum Einsatz kommenden Bremsscheiben insbesondere bei deren Anordnung im Bereich der langsam drehenden Rotorwelle einen vergleichsweise großen Außendurchmesser von teilweise etwa 3,5 und mehraufweisen. Folglich ist nicht nur die Erstmontage, sondern auch die Reparatur bzw. Austausch einer derart großen Bremsscheibe, insbesondere in schlecht zugänglichen Gebieten oder auf See, mit großem Aufwand verbunden, der möglichst verhindert werden sollte. Bei Bremsen, die hinter dem Getriebe im Bereich der schnell drehenden Generatorwelle angeordnet sind, sind die Durchmesser der Bremsscheiben aufgrund des geringeren Drehmomentes erheblich kleiner. Die im Bereich der Generatorwelle vorgesehenen Bremsscheiben haben üblicherweise Durchmesser von 0,6 bis 1,2 m.

Eine gattungsgemäße Rotorbremsvorrichtung für Windenergieanlagen wird in der DE 20 2009 004 959 U1 beschrieben. Die beschriebene Bremsvorrichtung verfügt über eine Bremsaktorik, die die Bremselemente zwischen einer Bremsstellung und einer Laufstellung hin und her bewegen kann. Die beschriebene Bremsvorrichtung zeichnet sich vor allem dadurch aus, dass nicht nur ein Messsystem vorgesehen ist, um die Stellung der Komponenten der Rotorbremsvorrichtung zu erfassen, sondern auch eine zusätzliche Sensorik die Funktionsfähigkeit des Messsystems überwacht. Auf diese Weise soll vor allem ein unzulässiges Anlaufen des Windrotors verhindert werden.

Ausgehend von den aus dem Stand der Technik erkannten bekannten Bremsvorrichtungen für Windenergieanlage, insbesondere den bekannten Rotor- und Azimutbremsvorrrichtungen, sowie den zuvor geschilderten technischen Randbedingungen und Problemen liegt der Erfindung die Aufgabe zu Grunde, eine Bremsvorrichtung anzugeben, die über eine besondere Verschleißfestigkeit verfügt, sodass selbst bei einer Vielzahl von Notstopps und Bremsvorgängen ein verschleißarmer Betrieb der Bremseinrichtung über einen vergleichsweise langen Betriebszeitraum gewährleistet ist. Gleichzeitig sollte der während der Bremsvorgänge an den Reibbelagsflächen auftretende Abrieb und die hiermit verbundene Bildung von Bremsstaub minimiert werden. Weiterhin sollte der Aufwand für Wartungs- und Reparaturarbeiten zumindest erheblich gegenüber den bekannten Bremsvorrichtungen verringert werden, wobei insbesondere Beschädigungen sowie ein Verschleiß im Bereich der während eines Bremsvorgangs in Kontakt kommenden Reibflächen zuverlässig vermieden werden soll. Ferner sollte die anzugebende technische Lösung sicherstellen, dass Maßnahmen zur Herstellung der Verschleißbeständigkeit einer Bremsvorrichtung mit möglichst einfachen Mitteln und auch in bereits errichteten Windenergieanlagen umsetzbar sind. Die anzugebende technische Lösung sollte für unterschiedliche Bremsvorrichtungen, also insbesondere für die Abbremsung der Rotorwelle und der Generatorwelle und als Azimutbremse zum Abbremsen einer Bewegung der Gondel relativ zum Turm geeignet sein. Im Weiteren soll die Wirtschaftlichkeit des Betriebs einer Windenergieanlage, insbesondere bei Windenergieanlagen mit großen Rotordurchmessern, deren Bremsvorrichtungen Bremsscheiben mit einem Außendurchmesser von wenigstens 3,5 m aufweisen, verbessert werden.

Die zuvor beschriebene Aufgabe wird mithilfe einer Bremsvorrichtung gemäß Anspruch 1 sowie einer Windenergieanlage nach Anspruch 9 gelöst. Ferner ist in Anspruch 10 ein Verfahren zur Verbesserung der Verschleißeigenschaften und Minimierung der Bremsstaubbildung einer Bremsvorrichtung für eine Windenergieanlage angegeben. Vorteilhafte Ausführungsformen der Erfindung sind Gegenstand der abhängigen Ansprüche und werden in der folgenden Beschreibung unter teilweiser Bezugnahme auf Figuren näher erläutert.

Die Erfindung betrifft eine Bremsvorrichtung für eine Windenergieanlage mit wenigstens einer Bremsscheibe, die mechanisch an eine vom Wind wenigstens mittelbar antreibbare Welle gekoppelt oder Teil einer Azimutbremse ist und mit wenigstens einem Bremselement, das mittels einer an einen mechanischen, elektromechanischen, pneumatischen, elektrischen und/oder hydraulischen Antrieb gekoppelten Bremsaktorik relativ zur Bremsscheibe in wenigstens eine Bremsstellung, in der das Bremselement die Bremsscheibe wenigstens bereichsweise berührt, und in zumindest eine Laufstellung, in der das Bremselement von der Bremsscheibe abgehoben ist, bewegbar ist. Die erfindungsgemäße Bremsvorrichtung zeichnet sich dadurch aus, dass das Bremselement, etwa ein Bremsklotz und/oder Bremsbelag, in einem Reibbereich, der die Bremsscheibe in der Bremsstellung wenigstens teilweise berührt, eine durch einen thermischen Beschichtungsvorgang erzeugte, einen Verschleiß im Reibbereich zumindest reduzierende Beschichtung aufweist. Der erfindungswesentliche Gedanke besteht somit darin, dass das wenigstens eine Bremselement, insbesondere in Form eines Bremsklotzes und/oder eines bevorzugt an einem Bremsklotz befestigten Bremsbelags das bei einem Bremsvorgang mithilfe einer Bremsaktorik relativ zur Bremsscheibe bewegt und gegen diese gedrückt bzw. gepresst wird, über eine mit einem thermischen Beschichtungsvorgang aufgebrachte Beschichtung verfügt. Unabhängig davon, ob die Erfindung in einer Rotorbremsvorrichtung und/oder in einer die Drehung der Gondel in einer Horizontalebene zumindest erschwerenden Azimutbremsvorrichtung realisiert wird, ist es wesentlich, dass eine entsprechende Beschichtung auf dem wenigstens einen Bremselement angeordnet ist, das üblicherweise als Bauteil, das schneller als die Bremsscheibe verschleißt, ausgeführt ist. Während die Bremsscheibe bei einer Rotorbremsvorrichtung mechanisch mit der Rotorwelle oder mit der zwischen einem Getriebe, das der Rotorwelle nachgeschaltet ist, und einem Generator angeordneten Generatorwelle verbunden ist, ist die Bremsscheibe bei einer Azimutbremsvorrichtung mit dem Turm oder der Gondel, bevorzugt dem Turm, verbunden.

Gemäß der Erfindung wird der bei einem Bremsvorgang erfolgende Abrieb von der Reibfläche des wenigstens einen Bremselements und damit die dadurch verursachte Bremsstaubbildung zumindest erheblich minimiert. Im Weiteren kann auch auf der Bremsscheibe auf der dem Reibbereich des Bremselements während des Bremsvorgangs zugewandten Oberfläche eine durch einen thermischen Beschichtungsvorgang erzeugte Schutzschicht vorgesehen sein, diese ist allerdings gemäß der Erfindung nicht zwingend erforderlich. Vielmehr beruht die Erfindung darauf, dass das wenigstens eine Bremselement, insbesondere dessen Reibfläche, durch eine im Wege eines thermischen Beschichtungsvorgangs aufgebrachte Beschichtung vor übermäßigem Verschleiß und Abrieb geschützt ist. Hierbei wird berücksichtigt, dass die Reibfläche des wenigstens einen Bremselements deutlich kleiner als die Reibfläche der Bremsscheibe ist, die bei einem Bremsvorgang mit dem Bremselement in Kontakt gebracht wird. Überraschenderweise ist in diesem Zusammenhang festgestellt worden, dass, insbesondere bei sehr großen Bremsscheiben mit einem Außendurchmesser von mehr als 3 m, die Reibfläche des wenigstens einen Bremselements härter als die korrespondierende Reibfläche der Bremsscheibe sein kann, ohne dass dies während der Betriebszeit einer Windenergieanlage zu Nachteilen führt.

Erfindungsgemäß verfügt das wenigstens eine Bremselement somit über eine im Wege eines thermischen Beschichtungsvorgangs, insbesondere durch Plasmaspritzen, Hochgeschwindigkeitsflammspritzen (HVOF), Pulverflammspritzen, Drahtflammspritzen, Lichtbogenspritzen oder durch ein Hochleistungslichtbogenverfahren unter Zuführung von Material in Form von Pulver oder als Draht auf die Oberfläche im Reibbereich aufgebrachte, den Verschleiß mindernde Beschichtung. Durch derartige thermische Beschichtungsvorgänge können besonders verschleißfeste Beschichtungen auf der Oberfläche der Bremselemente hergestellt werden. Vorteilhaft hierbei ist, dass nicht ein vergleichsweise großer Reibbereich, wie dies bei der Beschichtung einer Bremsscheibe der Fall wäre, beschichtet werden und andererseits eine Fläche geschützt wird, deren Belastung während des Bremsvorgangs verhältnismäßig groß ist, da die auf Bremsscheibe einwirkenden Bremskräfte über einen vergleichsweise großen Bereich eingeleitet werden. Von der auf dem Bremselement angeordneten Beschichtung werden während des Betriebs, insbesondere bei Bremsvorgängen, Werkstoffatome auf die Bremsscheibe in Form einer dünnen Matrixschicht mit einer Schichtdicke von 2-3µm übertragen. Dadurch wird eine Gleitpaarung geschaffen, die jedoch den Reibungskoeffizienten nicht nachteilig beeinflusst.

Eine übermäßige Abnutzung der Bremsscheibe wird daher ebenfalls durch die erfindungsgemäß auf dem Bremselement vorgesehene Beschichtung verhindert.

Mithilfe der Erfindung wird eine bislang vollständig unbekannte technische Lösung, nämlich die Beschichtung des Bremselements anstelle der Bremsscheibe vorgeschlagen, durch die eine besonders verschleiß-, insbesondere abriebarme Rotorbremsvorrichtung für Windenergieanlagen bereitgestellt und somit ein verbesserter wirtschaftlicher Betrieb einer Windenergieanlage, insbesondere einer Windenergieanlage mit Bremsscheiben, deren Außendurchmesser größer als 3,5 m ist, erreicht.

Aufgrund der großen Härte und Verschleißfestigkeit der Beschichtung tritt nahezu kein verschleißbedingter Abrieb während des Betriebs auf. Aus diesem Grund wird die Erzeugung von Bremsstaub minimiert, sodass nicht nur die Menge des anfallenden Feinstaubs reduziert wird, sondern vor allem auch Ablagerungen von Bremsstaub in der Gondel der Windenergieanlage zuverlässig verhindert werden.

Gemäß einer bevorzugten Ausführungsform der Erfindung enthält die Beschichtung zumindest einen Werkstoff ausgewählt aus einer Gruppe, zu der Wolframcarbid, Chromcarbid, Wolframcarbid-Kobalt-Verbindungen und Nickel-Chrom-Verbindungen gehören. Von besonderem Vorzug ist, wenn eine dicke der Schicht vor erster Inbetriebnahme der Rotorbremsvorrichtung in einem Bereich zwischen 0,1 bis 0,4 mm, besonders bevorzugt zwischen 0,2 und 0,3 mm liegt..

Gemäß einer besonderen Weiterbildung der Erfindung ist die Bremsscheibe mit einer Rotorwelle des Windrades verbunden, wobei sich die Rotorwelle im Vergleich zur Generatorwelle vergleichsweise langsam dreht. In diesem Bereich ist ausreichend Platz für die Unterbringung einer Bremsscheibe, sodass die Erfindung vorzugsweise für Bremselemente genutzt wird, die während eines Bremsvorgangs gegen Bremsscheiben, die einen Durchmesser von 3000-4200 mm aufweisen, gedrückt werden. Vor der ersten Inbetriebnahme weist die Bremsscheibe bevorzugt zumindest eine Dicke von 20 mm auf und kann bevorzugt 40 bis 50 mm, besonders bevorzugt etwa 45 mm betragen. Gemäß einer bevorzugten Ausgestaltung der Erfindung beträgt die Dicke der Bremsscheibe einer Bremsvorrichtung, die im Bereich der zwischen Getriebe und Generator angeordneten Generatorwelle, vorgesehen ist und einen Außendurchmesser von 0,6 bis 1,2 m aufweist, etwa 20 mm, während die Dicke einer im Bereich der Rotorwelle angeordneten Bremsscheibe mindestens 40 mm beträgt.

Neben einer Bremsvorrichtung für Windenergieanlagen, insbesondere eine Rotor- und/oder Azimutbremsvorrichtung, betrifft die Erfindung auch eine Windenergieanlage mit wenigstens einer Bremsvorrichtung, die gemäß einer der zuvor beschriebenen Ausgestaltungen ausgeführt ist. Gemäß einer ganz speziellen Weiterbildung der Erfindung ist eine Windenergieanlage vorgesehen, die sowohl eine bei einem Bremsvorgang auf die Rotorwelle als auch eine auf die Generatorwelle wirkende Rotorbremsvorrichtung, die jeweils gemäß einer der zuvor beschriebenen Ausführungsformen ausgebildet sind, aufweist. Ergänzend kann auch eine erfindungsgemäß ausgeführte Azimutbremsvorrichtung vorgesehen sein.

Im Weiteren betrifft die Erfindung auch ein Verfahren zur Verbesserung der Verschleißbeständigkeit einer Rotorbremsvorrichtung einer Windenergieanlage, die über wenigstens ein Bremselement verfügt, das relativ zu einer mit der Rotorwelle mitdrehenden Bremsscheibe bewegbar ist. Wesentlich an dem erfindungsgemäßen Verfahren ist, dass eine besondere Verschleißbeständigkeit der Rotorbremsvorrichtung erreicht wird, indem auf einer Reibfläche des Bremselements, die bei Einleitung eines Bremsvorgangs gegen die Bremsscheibe gedrückt wird, zumindest bereichsweise eine Beschichtung im Wege eines thermischen Beschichtungsvorgangs aufgebracht wird. Vorzugsweise wird eine derartige Beschichtung durch Plasmaspritzen, Pulverflammspritzen, Drahtflammspritzen, Lichtbogenspritzen oder ganz besonders bevorzugt durch ein Hochleistungslichtbogenverfahren unter Zuführung von Material in Form von Pulver oder als Draht oder durch Hochgeschwindigkeitsflammspritzen (HVOF) aufgebracht.

Gemäß einer speziellen Ausführungsform wird eine Schicht mit einer Dicke von 0,1 bis 0,4 mm, bevorzugt von 0,2 bis 0,3 mm aufgebracht. Als Material für die Beschichtung wird zumindest ein Werkstoff ausgewählt aus einer Gruppe, zu der Wolframcarbid, Chromcarbid, Nickel-Chromverbindungen und Wolframcarbid-Kobalt gehören, verwendet.

Im Folgenden wird die Erfindung ohne Beschränkung des allgemeinen Erfindungsgedankens anhand eines Ausführungsbeispiels unter Bezugnahme auf die Figuren näher erläutert. Dabei zeigen:
- Fig. 1:: Teilschnittdarstellung des Rotorlagers einer Windenergieanlage mit einer erfindungsgemäß ausgeführten Rotorbremsvorrichtung und einer Rotorarretierung;
- Fig. 2:: Frontansicht auf die Rotorhohlwelle und die Bremsscheibe einer Windenergieanlage mit einer erfindungsgemäß ausgeführten Rotorbremsvorrichtung;
- Fig. 3:: perspektivische Frontansicht auf die Rotorhohlwelle einer Windenergieanlage mit einer erfindungsgemäß ausgeführten Rotorbremsvorrichtung während der Montage der Bremsscheibe sowie
- Fig. 4:: schematische Darstellung eines Bremssattels mit Bremselementen für eine Rotorbremsvorrichtung einer Windenergieanlage mit einer durch einen thermischen Beschichtungsvorgang erzeugten Beschichtung.

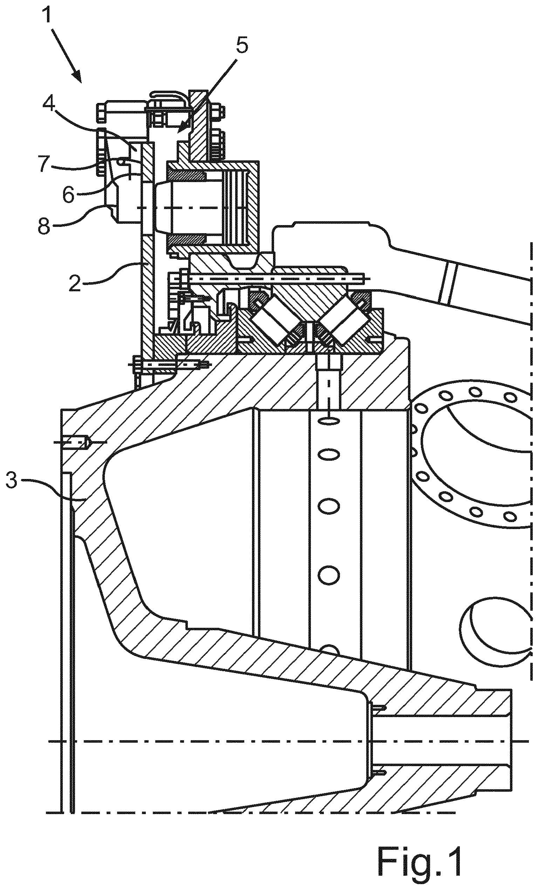

Fig. 1 zeigt in einer Teilschnittdarstellung das Rotorlager einer Windenergieanlage, die über eine erfindungsgemäß ausgeführte Rotorbremsvorrichtung 1 verfügt. Generell werden hydraulisch betätigte Bremsen als Betriebsbremsen nur bei Windenergieanlagen mit kleineren Nennleistungen verwendet. Für größere Leistungen wird eine hydraulisch betätigbare Bremse nur als Haltebremse ausgeführt.

Üblicherweise wird eine Windenergieanlage hauptsächlich aerodynamisch über Verstellen der Flügel gebremst. Das Verstellen eines einzelnen Flügels reicht hierbei aus, um die Windenergieanlage vollständig zu bremsen. Bei Stall- Anlagen wird dies meist über verdrehbare Blattspitzen (Tip-Bremsen) und bei pitchgeregelten Anlagen durch Verdrehen des ganzen Rotorblattes realisiert. Zusätzlich zu diesen aerodynamischen Bremsen kommen vielfach Scheibenbremsen zur Fixierung der Rotorblätter sowie zur Not-Abschaltungen und zum manuellen Stopp bei Wartung und Reparatur einer Windenergieanlage zum Einsatz. Bei kleineren Windenergieanlagen kann eine Bremsvorrichtung sowohl auf der langsamer drehenden Welle, der Rotorwelle, sowie auf der schneller drehenden Welle hinter dem Getriebe, der Generatorwelle, montiert sein. Der Vorteil der Bremsung der langsamer drehenden Welle besteht darin, dass das Getriebe im Bremsvorgang nicht belastet wird. Bei größeren Windenergieanlagen, insbesondere mit einer Nennleistung von mehr als 600 kW, ist das Moment auf der langsamer drehenden Welle allerdings zu groß, sodass hier die Bremse generatorseitig auf der schneller drehenden Welle, die ein kleineres Drehmoment aufweist, montiert ist.

Gemäß der in Fig. 1 gezeigten Ausführungsform weist die Windenergieanlage eine Scheibenbremse mit einer Bremsscheibe 2 und Bremselementen 4 die innerhalb eines Bremssattels 8 gelagert und mittels einer Bremsaktorik 5 derart bewegbar sind, dass die Bremselemente 4 mit ihren Reibflächen 6 während eines Bremsvorgangs gegen die rotierende Bremsscheibe gedrückt bzw. gepresst werden. Aufgrund der hierbei entstehenden Reibung zwischen der Reibfläche 6 der Bremselemente 4 und der Reibfläche der Bremsscheibe 2 wird die Bremsscheibe 2 und die mechanisch mit der Bremsscheibe 2 verbundene Rotorwelle 3, und damit auch der Rotor der Windenergieanlage, abgebremst. Entsprechende Bremsvorgänge sind erforderlich, um den Windrotor, beispielsweise bei einem Notstopp, vollständig zum Stillstand zu bringen.

Gemäß der in Fig. 1 gezeigten Ausgestaltung der Rotorbremsvorrichtung verfügen die Bremselemente 4 an den Reibflächen 6 auf ihrer Oberfläche über eine Beschichtung 7, die im Wege eines thermischen Beschichtungsvorgangs, hier durch Hochgeschwindigkeitsflammspritzen (HVOF) oder alternativ durch ein Hochleistungslichtbogenverfahren unter Zuführung von Material in Form von Pulver oder als Draht, aufgebracht wurde und Wolframcarbid enthält. Eine derartige Beschichtung 7 zeichnet sich durch ihre Verschleißbeständigkeit aus, sodass insbesondere der bei einem Bremsvorgang verursachte Abrieb im Bereich der Bremselemente 4 minimiert wird. Durch die erfindungsgemäß vorgesehene verschleißbeständige Beschichtung 7 wird einerseits sichergestellt, dass der Verschleiß der Bremselement minimiert und so über einen vergleichsweise langen Zeitraum ein Betrieb ohne Wartung oder Austausch der Bremselemente möglich ist. Darüber hinaus wird die Entstehung von Bremsstaub bedingt durch Abrieb an der Oberfläche der Bremselemente 4 verringert, sodass die Ablagerung von Bremsstaub in der Gondel, die etwa zum Zusetzen von Filtermatten der Schaltschrankbelüftungen oder -kühlung und damit zu einer Beeinträchtigung der Schaltschrankkühlung führen kann, sowie vor allem Gefährdungen des Betriebs- und Wartungspersonals bedingt durch das Einatmen von Bremsstaub minimiert werden.

Erfindungswesentlich ist, dass eine entsprechende Beschichtung 7 als Schutzschicht im Wege eines thermischen Beschichtungsvorgang auf wenigstens ein Bremselement 4 und nicht notwendigerweise auf die Bremsscheibe aufgebracht wird. Wesentlich hierbei, dass die Reibfläche 6 der Bremselemente 4 im Vergleich zur Reibfläche der Bremsscheibe 2 vergleichsweise klein ist, sodass die pro Flächeneinheit auftretenden Kräfte im Bereich der Bremselemente 4 größer sind, was üblicherweise zu einem vergleichsweise starken Abrieb führt. Diesem Abrieb im Bereich der Bremselemente 4 wird durch die erfindungsgemäß aufgebrachten Beschichtung 7 entgegengewirkt.

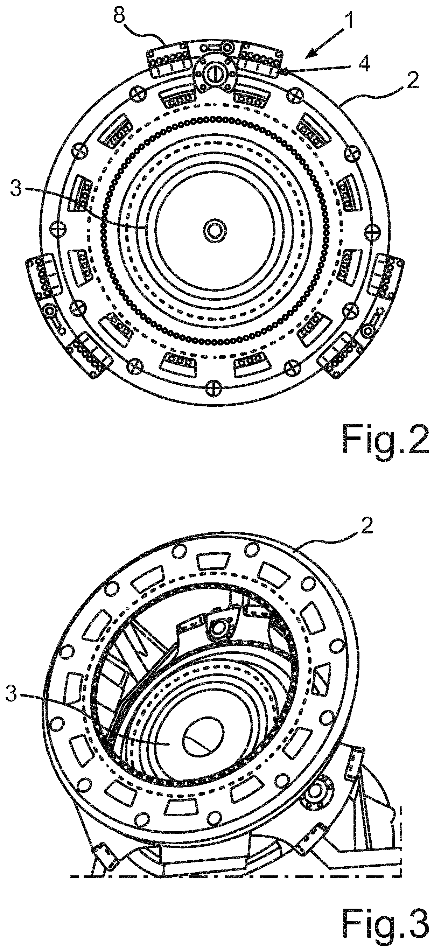

In Fig. 2 ist die Rotorwelle 3 einer Windenergieanlage mit einer erfindungsgemäß ausgeführten Rotorbremsvorrichtung 1 in einer Frontansicht dargestellt. Die Rotorbremsvorrichtung 1 verfügt wiederum über eine Bremsscheibe 2, die mechanisch an die Rotorwelle 3 gekoppelt ist und sich im Betrieb der Windenergieanlage gemeinsam mit dem Rotor und der Rotorwelle 3 dreht. Bei einem Bremsvorgang werden die im Bremssattel 8 gelagerten Bremselemente 4 gegen die Bremsscheibe 2 gedrückt und so die Drehgeschwindigkeit der Bremsscheibe 2 sowie der damit verbundenen Rotorwelle 3 und des Rotors verringert. Bei einem Notstopp kommen die Bremsscheibe 2 und der Rotor sogar vollkommen zum Stehen.

Die bei dem in Fig. 2 gezeigten Ausführungsbeispiel verwendeten Bremselemente 4 zum Abbremsen der Bremsscheibe 2 verfügen auf ihrer Oberfläche, die bei einem Bremsvorgang in Kontakt mit der Bremsscheibe 2 kommt, über eine Beschichtung 7, die im Wege eines thermischen Beschichtungsvorgang, hier durch Hochgeschwindigkeitsflammspritzen (HVOF) oder alternativ durch ein Hochleistungslichtbogenverfahren unter Zuführung von Material in Form von Pulver oder als Draht, aufgebracht wurde. Erfindungswesentlich ist wiederum, dass die Bremselemente 4, die bei einem Bremsvorgang relativ zur Bremsscheibe bewegt und hierbei gegen diese gedrückt werden, mit einer entsprechenden verschleißmindernden Beschichtung versehen sind.

Im Weiteren zeigt Fig. 3 in einer perspektivischen Darstellung die Rotorwelle 3 einer Windenergieanlage während der Montage der Bremsscheibe 2. Während der Montage wird die Bremsscheibe 2 derart im Bereich des Rotorlagers befestigt, dass diese mechanisch an die Rotorwelle gekoppelt ist. Die Bremsscheibe 2 dreht sich somit während des Betriebs der Windenergieanlage gemeinsam mit dem Rotor. Die in Fig, 3 gezeigte Bremsscheibe 2hat einen Außendurchmesser von etwa 4050 mm und verfügt vor der ersten Inbetriebnahme über eine Bremsscheibendicke von 45 mm.

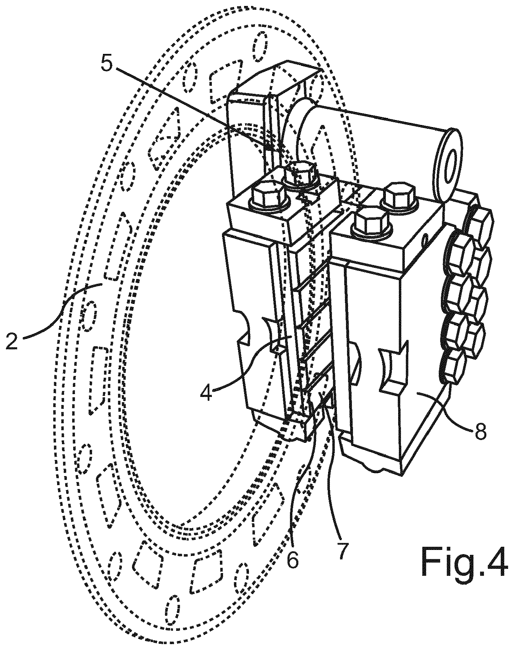

Fig. 4 zeigt in einer perspektivischen Darstellung hydraulisch betätigbare Bremselemente 4 für eine erfindungsgemäß ausgeführte Rotorbremsvorrichtung 1 einer Windenergieanlage für eine Scheibenbremse. Ergänzend oder alternativ kann eine entsprechend ausgeführte Vorrichtung auch in einer Azimutbremse eingesetzt werden. Die in Fig. 4 gezeigten Bremselemente 4 sind in montierten Zustand der Bremse beidseitig einer im Betrieb gemeinsam mit einer Rotorwelle drehenden Bremsscheibe 2 angeordnet und verfügen auf ihrer Oberfläche, die während eines Bremsvorgangs eine Reibfläche bildet, über eine im Wege eines thermischen Beschichtungsvorgangs erzeugte Beschichtung 7. Um einen Bremsvorgang einzuleiten, werden die Bremselemente 4 mit ihren Reibflächen 6 mit Hilfe einer hydraulisch betätigten Bremsaktorik 5 gegen die Bremsscheibe 2 einer Bremsvorrichtung 1 gedrückt. Da die Bremsscheibe 2 mechanisch mit der Rotorwelle 3 verbunden ist, führt ein Abbremsen der Bremsscheibe 2 gleichzeitig zum Abbremsen des Windrotors. Soll der Bremsvorgang beendet werden, werden die Bremselemente 4 bewegt und so von der Bremsscheibe 2 gelöst bzw. gelüftet, indem der hydraulische Druck abgebaut wird. Alternativ ist es denkbar, dass das Lösen der Bremselemente 4 durch eine Federkraft oder ein Umsteuern des hydraulischen Drucks bewirkt wird. Gemäß der gezeigten Ausführungsform verfügen die Bremselemente 4 im Bereich der Reibflächen 6 wiederum über eine durch Hochgeschwindigkeitsflammspritzen (HVOF) oder alternativ ein Hochleistungslichtbogenverfahren unter Zuführung von Material in Form von Pulver oder als Draht aufgebrachte, die Reibfläche 6 vor Verschleiß schützende Beschichtung 7.

Während des Betriebs einer Windenergieanlage mit der jeweils eingesetzten Bremsvorrichtung ist zu beachten, dass Schäden weitgehend vermieden werden sollen und Wartungsintervalle möglichst lang sind. Da Windenergieanlagen oftmals in abgelegenen Gebieten, sogar in Wüstenregionen, oder auf See betrieben werden, sind in der Gondel angeordnete mechanischen Komponenten, insbesondere die Rotorbremsvorrichtung und Getriebe, teilweise erheblichen Belastungen aufgrund von Staub, Sand, Temperaturschwankungen, Luftfeuchte und Salzgehalt der Luft ausgesetzt. Die entsprechend eingesetzten Komponenten und hier vor allem die Bremsvorrichtung müssen somit besonders widerstandsfähig ausgelegt sein. Gemäß der vorliegenden Erfindung verfügen die Bremselemente 4 einer Rotorbremsvorrichtung 1 auf ihrer Oberfläche im Bereich der Reibfläche, die während eines Bremsvorgangs in Kontakt mit der Bremsscheibe gebracht wird, über eine Beschichtung 7, die im Wege eines thermischen Beschichtungsvorgang aufgebracht wurde. Eine derartige Beschichtung 7 zeichnet sich durch eine besonders hohe Verschleißbeständigkeit aus, sodass bei einem Bremsvorgang der Abrieb an der Oberfläche der Bremselemente 4 minimiert wird. Dies führt wiederum zu einer Verringerung der Staubbelastung im Bereich der Gondel, was sich positiv auf die Betriebseigenschaften der übrigen in diesem Bereich angeordneten mechanischen Komponenten auswirkt. Der wesentliche erfindungsgemäße Gedanke beruht somit darauf, bei einer Rotorbremsvorrichtung 1 für Windenergieanlagen auf der Oberfläche der Bremselemente 4, die während des Bremsvorgangs gegen die Bremsscheibe 2 gedrückt werden, und nicht notwendigerweise auf der Bremsscheibe, eine Beschichtung im Wege eines thermischen Beschichtungsvorgang, insbesondere durch Hochgeschwindigkeitsflammspritzen (HVOF) oder durch ein Hochleistungslichtbogenverfahren unter Zuführung von Material in Form von Pulver oder als Draht, aufzubringen.

### Bezugszeichenliste

- 1: Rotorbremsvorrichtung
- 2: Bremsscheibe
- 3: Rotorwelle
- 4: Bremselement
- 5: Bremsaktorik
- 6: Reibfläche
- 7: Beschichtung
- 8: Bremssattel

## Patentansprüche

1. Bremsvorrichtung (1) für eine Windenergieanlage mit einer Bremsscheibe (2), die mechanisch an eine vom Wind wenigstens mittelbar antreibbare Welle (3) gekoppelt oder Teil einer Azimutbremsvorrichtung ist und mit wenigstens einem Bremselement (4), das mittels einer Bremsaktorik (5) relativ zur Bremsscheibe (2) in wenigstens eine Bremsstellung, in der das Bremselement (4) die Bremsscheibe (2) wenigstens bereichsweise berührt, und in zumindest eine Laufstellung, in der das Bremselement (4) von der Bremsscheibe (2) abgehoben ist, bewegbar ist, **dadurch gekennzeichnet, dass** das Bremselement (4) in einem Reibbereich (6), der die Bremsscheibe (2) in der Bremsstellung wenigstens teilweise berührt, eine durch einen thermischen Beschichtungsvorgang erzeugte, einen Verschleiß des Reibbereichs (6) zumindest verringernde Beschichtung (7) aufweist.

2. Bremsvorrichtung nach Anspruch 1,
**dadurch gekennzeichnet, dass** die einen Verschleiß des Reibbereichs (6) zumindest verringernde Beschichtung (7) wenigstens teilweise durch Hochgeschwindigkeitsflammspritzen (HVOF) und/oder durch ein Hochleistungslichtbogenverfahren unter Zuführung von Material in Form von Pulver oder als Draht erzeugt wurde.

3. Bremsvorrichtung nach einem der vorangehenden Ansprüche,
**dadurch gekennzeichnet, dass** die Beschichtung (7) zumindest einen Werkstoff ausgewählt aus einer Gruppe, zu der Wolframcarbid, Chromcarbid, Wolframcarbid-Kobalt-Verbindungen und Nickel-Chrom-Verbindungen gehören, aufweist.

4. Bremsvorrichtung nach einem der vorangehenden Ansprüche,
**dadurch gekennzeichnet, dass** eine Dicke der Beschichtung (7) vor erster Inbetriebnahme 0,1 mm bis 0,4 mm, insbesondere 0,2 bis 0,3 mm beträgt.

5. Bremsvorrichtung nach einem der vorangehenden Ansprüche,
**dadurch gekennzeichnet, dass** die Bremsscheibe (2) mit der Rotorwelle (3) des Windrades verbunden ist.

6. Bremsvorrichtung nach einem der vorangehenden Ansprüche,
**dadurch gekennzeichnet, dass** die Bremsscheibe (2) wenigstens mittelbar mit der zwischen Getriebe und Generator angeordneten Generatorwelle verbunden ist.

7. Bremsvorrichtung nach einem der vorangehenden Ansprüche,
**dadurch gekennzeichnet, dass** die Bremsscheibe (2) zumindest mittelbar mit der Gondel oder dem Turm der Windenergieanlage verbunden ist.

8. Bremsvorrichtung nach einem der vorangehenden Ansprüche,
**dadurch gekennzeichnet, dass** die Bremsscheibe (2) einen Außendurchmesser von 3000 bis 5500 mm aufweist.

9. Bremsvorrichtung nach einem der vorangehenden Ansprüche,
**dadurch gekennzeichnet, dass** die Bremsscheibe (2) vor Inbetriebnahme zumindest eine Dicke von wenigstens 20 mm aufweist.

10. Windenergieanlage mit einer Bremsvorrichtung (1) nach wenigstens einem der vorangegangenen Ansprüche.

11. Windenergieanlage mit wenigstens zwei Bremsvorrichtungen (1) nach einem der Ansprüche 1 bis 9, von denen wenigstens eine mit einer Rotorwelle und wenigstens eine mit einer Generatorwelle verbunden ist.

12. Windenergieanlage nach einem der vorangehenden Ansprüche,
**dadurch gekennzeichnet, dass** die Bremsaktorik wenigstens teilweise an einen mechanischen, elektromechanischen, pneumatischen, hydraulischen und/oder elektrischen Antrieb gekoppelt ist.

13. Verfahren zur Verbesserung der Verschleißbeständigkeit und Minimierung des Bremsstaubanfalls bei einer Bremsvorrichtung (1) einer Windenergieanlage, die über wenigstens ein Bremselement (4) verfügt, das relativ zu einer im Betrieb mit einer wenigstens mittelbar vom Wind antreibbaren Welle (3) mitdrehenden oder mit einer zu einer Azimutbremsvorrichtung gehörenden Bremsscheibe (2) bewegbar ist und während eines Bremsvorgangs die Bremsscheibe (2) wenigstens bereichsweise berührt,
**dadurch gekennzeichnet, dass** wenigstens bereichsweise auf einen Reibbereich (6) des Bremselements (4), der die Bremsscheibe (2) in der Bremsstellung wenigstens teilweise berührt, eine Beschichtung (7), die einen Verschleiß des Reibbereichs (6) zumindest verringert, durch einen thermischen Beschichtungsvorgang aufgebracht wird.

14. Verfahren nach Anspruch 13,
**dadurch gekennzeichnet, dass** die einen Verschleiß des Reibbereichs (6) zumindest verringernde Beschichtung (7) wenigstens teilweise durch Hochgeschwindigkeitsflammspritzen (HVOF) und/oder durch ein Hochleistungslichtbogenverfahren unter Zuführung von Material in Form von Pulver oder als Draht erzeugt wird.

15. Verfahren nach Anspruch 13 oder 14,
**dadurch gekennzeichnet, dass** für die Beschichtung (7) zumindest ein Werkstoff ausgewählt aus einer Gruppe, zu der Wolframcarbid, Chromcarbid, Wolframcarbid-Kobalt-Verbindungen und Nickel-Chrom-Verbindungen gehören, verwendet wird und/oder die Beschichtung (7) zumindest bereichsweise mit einer Dicke von 0,1 bis 0,4 mm, insbesondere von 0,2 bis 0,3 mm, aufgebracht wird.
